# FASCICULE DE BREVET EUROPEEN

(11) **EP 2 097 227 B1**
(45) Date de publication et mention de la délivrance du brevet: **12.05.2010**
(21) Numéro de dépôt: 07822757.6
(22) Date de dépôt: 20.11.2007
(51) Int. Cl.: B25J 21/02, G21F 7/04

(54) **BOITE A GANT A ENCEINTE ETANCHE ECLAIREE**
HANDSCHUHKASTEN MIT BELEUCHTETER KAMMER
GLOVE-BOX WITH SEALED ILLUMINATED CONTAINMENT

(30) Priorité: 23.11.2006 FR 0655059
(43) Date de publication de la demande: 09.09.2009
(73) Titulaire: Areva NC, 75009 Paris (FR)
(72) Inventeur: LECOUTRE, Serge, 30130 Saint Alexandre (FR); COUDIERE, Christophe, 30150 Montfaucon (FR)
(74) Mandataire: Ilgart, Jean-Christophe
(86) Numéro de dépôt international: PCT/EP2007/062585
(87) Numéro de publication internationale: WO 2008/061986

(56) Documents cités:
- EP-A- 0 554 117
- EP-B1- 0 430 687
- WO-A-01/14515
- WO-A-94/19922
- WO-A-02/074504
- DE-A1- 19 722 111
- FR-A1- 2 741 745
- JP-A- 9 234 253
- US-A1- 2003 070 404

## Description

La présente invention se rapporte de façon générale au domaine des boîtes à gant à enceinte étanche éclairée.

De l'art antérieur, on connaît une solution consistant à placer une ou plusieurs sources de lumière à l'intérieur de l'enceinte, cette solution se révélant très satisfaisante en terme de qualité d'éclairage obtenu. Néanmoins, il est souvent nécessaire de prévoir un dispositif d'éclairage à fort encombrement lorsque celui-ci est destiné à être logé au sein même de l'enceinte étanche, ce qui empêche son utilisation dans certains espaces de la boîte à gant ne présentant pas suffisamment de place libre pour accueillir un tel dispositif d'éclairage. Par ailleurs, dans un tel cas, la maintenance du dispositif est extrêmement difficile, et le traitement des déchets s'avère bien entendu lourd et onéreux.
Le document WO 94/19922 divulgue une boîte à gant selon le préambule de la revendication 1.

De l'art antérieur, on connaît également une solution consistant à placer une ou plusieurs sources de lumière à l'extérieur de l'enceinte, cette solution présentant l'avantage d'offrir une maintenance aisée et n'étant que peu contraignante en terme de traitement de déchets. Cependant, il a été remarqué que lorsqu'on place une source de lumière à l'extérieur de l'enceinte, à savoir derrière une paroi intégrant généralement une cloison en polycarbonate et une cloison de protection biologique espacée de celle-ci, la qualité de l'éclairage obtenu à l'intérieur de la boite à gant restait médiocre. En effet, cela s'explique en particulier par la création de reflets sur la cloison en polycarbonate ainsi que sur la cloison de protection biologique, rendant par conséquent l'éclairage particulièrement inefficace.

Ainsi, pour répondre au moins partiellement aux problèmes susvisés, l'invention propose une boite à gant à enceinte étanche délimitée au moins partiellement par une paroi disposant d'une cloison en polycarbonate et d'une cloison de protection biologique espacée de la cloison en polycarbonate et agencée extérieurement par rapport à celle-ci, la boîte à gant comprenant en outre des moyens d'éclairage de l'enceinte, ces moyens d'éclairage comportant une source de lumière logée entre la cloison en polycarbonate et la cloison de protection biologique.

Avec cette solution originale, il a été constaté que la qualité d'éclairage obtenue à l'intérieur de la boîte à gant était sensiblement identique à celle rencontrée avec les solutions de l'art antérieur dans lesquelles les moyens d'éclairage étaient situés au sein même de l'enceinte étanche. Cela s'explique par le fait que la disposition spécifique de la source de lumière entre la cloison en polycarbonate et la cloison de protection biologique limite fortement les reflets de la lumière sur cette cloison en polycarbonate en raison de la très forte proximité entre la source et cette même cloison, les reflets de la lumière sur la cloison de protection biologique pouvant quant à eux devenir quasi-inexistants.

De plus, la source de lumière étant placée hors de l'enceinte étanche délimitée par la paroi en polycarbonate, de préférence en Lexan^{®}, la maintenance est aisée et le traitement des déchets associés s'avère relativement simple, et donc peu onéreux.

Il est indiqué que l'implantation de la source de lumière entre la cloison en polycarbonate et la cloison de protection biologique peut avantageusement être mise en oeuvre sur la quasi-totalité des parois de l'enceinte étanche, ce qui permet de limiter fortement les zones d'ombres à l'intérieur de celle-ci, comme cela était notamment le cas dans certaines zones dés boîtes à gant de l'art antérieur.

Enfin, comme cela sera détaillé ci-dessous, les moyens d'éclairage peuvent de façon avantageuse être facilement réalisés à partir d'éléments simples et peu coûteux, ce qui rend ces moyens fortement optimisés en terme de coût de production.

De préférence, la source de lumière est un tube fluorescent, à savoir une lampe à vapeur de mercure à basse pression dans laquelle la plus grande partie de la lumière est émise par une ou plusieurs couches de substances fluorescentes excitées par le rayonnement ultraviolet de la décharge. Le choix préférentiel du tube fluorescent a été retenu en raison de la très bonne perception de couleurs procurée, sans effet stroboscopique, et de sa température de fonctionnement peu élevée, ces avantages se révélant d'autant plus remarquables lorsque les moyens d'éclairage comprennent un ballast électronique pour l'alimentation de cette source de lumière. A cet égard, il est indiqué que la température de fonctionnement d'un tel tube peut avantageusement être de l'ordre de celle habituellement rencontrée avec les diodes électroluminescentes.

La cloison de protection biologique est préférentiellement une cloison permettant d'atténuer les rayonnements gamma et/ou neutrons. De préférence, cette cloison de protection biologique est soit une cloison en verre dopé avec un absorbant neutrophage et/ou un absorbant dense, tel que le verre au plomb, soit une cloison en résine méthacrylique, comme le « Kyowaglas-XA^{®} ».

Il est naturellement prévu qu'un espacement entre la cloison en polycarbonate et la cloison de protection biologique soit de dimension suffisante pour que la source de lumière puisse être logée dans cet espace inter-cloison, cette dimension pouvant par exemple être de l'ordre de 40 mm, ou inférieure.

De préférence, afin de réduire quasiment à néant les reflets de lumière sur la paroi de protection biologique et sur la paroi en polycarbonate, les moyens d'éclairage comprennent un corps support portant fixement la source de lumière et présentant une ouverture de diffusion de lumière obturée par la cloison en polycarbonate. Dans cette configuration, il ne se produit avantageusement aucun reflet de la lumière sur la cloison de protection biologique entièrement isolée de la source de lumière, la forte proximité entre cette source et la cloison en polycarbonate n'entraînant quasiment aucun reflet de lumière sur cette même cloison obturant l'ouverture du corps support de la source de lumière.

Par ailleurs, les moyens d'éclairage comprennent de préférence également des moyens déflecteurs de lumière solidaires du corps support et situés à l'intérieur de celui-ci, les moyens déflecteurs orientant la lumière émise par la source de lumière vers la cloison en polycarbonate.

A titre d'exemple indicatif, le corps support peut être un élément métallique de section en forme de U, avec dans ce cas de préférence les deux extrémités libres du U au contact de la cloison en polycarbonate. A titre informatif, il est noté que la forme de U est préférentiellement retenue en raison de sa facilité de fabrication.

Enfin, pour obtenir une dissipation thermique la plus satisfaisante possible, le corps support est prévu en aluminium. Il a en effet été constaté que la température de fonctionnement de l'éclairage pouvait avantageusement être maintenue inférieure à 50°C, voire inférieure à 40°C dans le cas de l'emploi du « Kyowaglas-XA^{®} » pour la réalisation de la protection biologique.

D'autres avantages et caractéristiques de l'invention apparaîtront dans la description détaillée non limitative ci-dessous.

Cette description sera faite au regard des dessins annexés parmi lesquels ;
- la figure 1 représente une vue en coupe d'une partie de boîte à gant selon un mode de réalisation préféré de la présente invention ;
- la figure 2 représente une vue de côté des moyens d'éclairage équipant la boîte à gant montrée sur la figure 1 ;
- la figure 3 représente une vue en coupe prise le long de la ligne III-III de la figure 2 ; et
- la figure 4 représente une vue en coupe prise le long de la ligne IV-IV de la figure 2.

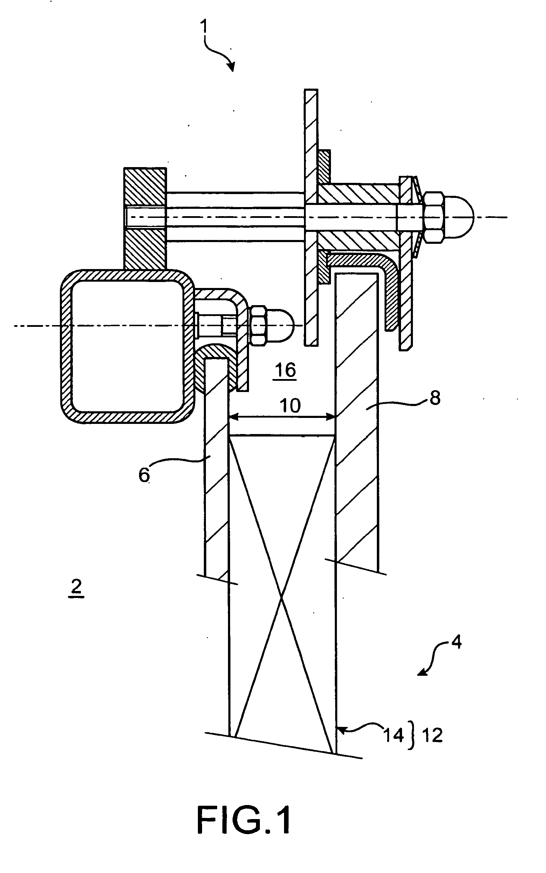

En référence tout d'abord à la figure 1, on peut apercevoir une partie d'une boîte à gant éclairée 1 selon un mode de réalisation préféré de la présente invention. Cette boîte à gant 1 présente une enceinte étanche 2 délimitée par une pluralité de parois 4, dont l'une seulement va être décrite ci-dessous. Cependant, il est noté que les autres parois non décrites pourraient disposer d'une conception identique ou similaire, ou bien d'une conception différente, sans sortir du cadre de l'invention.

La paroi 4 comporte tout d'abord une cloison en polycarbonate 6, et plus particulièrement en Lexan^{®}, la face intérieure de cette cloison. 6 délimitant l'enceinte étanche 2. Espacée de cette cloison 6, se trouve une cloison de protection biologique 8 du type réalisée en verre au plomb ou en « Kyowaglas-XA^{®} », cette cloison 8 étant disposée extérieurement par rapport à la cloison 6 et espacée de celle-ci d'un espacement 10 de l'ordre de 40 mm, voire d'une valeur inférieure pouvant être abaissée à 25 mm.

Il est noté que la conception qui vient d'être décrite est connue de l'homme du métier, et correspond à celle fréquemment rencontrée sur les boîtes à gant existantes.

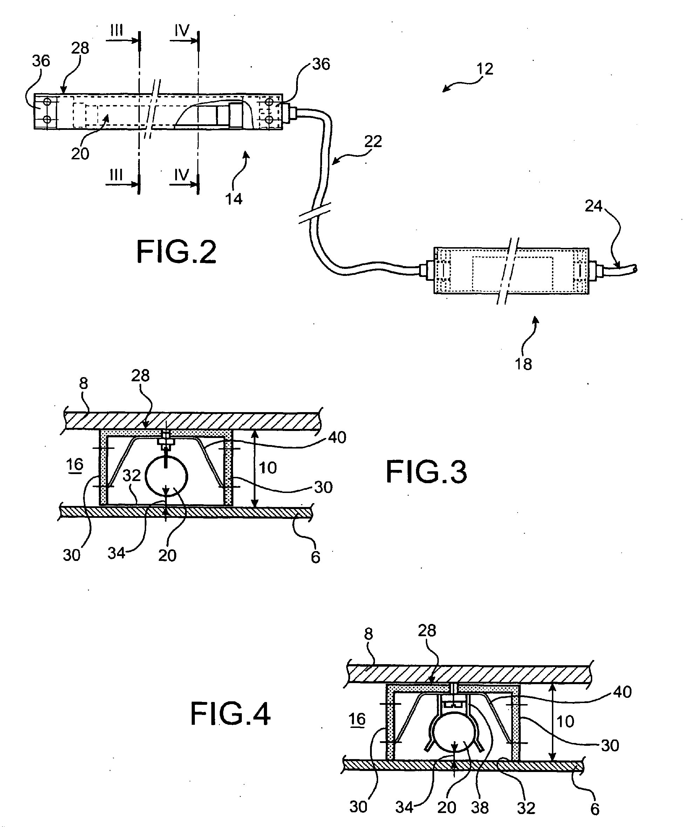

L'une des particularités de là présente invention réside dans la conception et la mise en place de moyens d'éclairage de l'enceinte étanche 2, ces moyens d'éclairage référencés 12 et montrés partiellement et schématiquement sur la figure 1 présentant la spécificité d'être munis d'une source d'éclairage logée dans l'espace inter-cloison 16 défini entre les cloisons 6 et 8. Plus précisément, c'est la totalité d'un module d'éclairage 14 des moyens 12 qui est logé dans l'espace inter-cloison 16, ce module 14 étant détaillé sur les figures 2 à 4 qui vont à présent être décrites.

En effet, les moyens d'éclairage 12 comprennent le module d'éclairage 14 ainsi qu'un ballast électronique 18 alimentant la source de lumière 20 du module 14, par l'intermédiaire d'un câblage approprié 22. A cet égard, il est précisé que le ballast 18 est quant à lui relié par un câblage 24 à une source d'énergie (non présentée).

Le module d'éclairage 14 comprend donc la source de lumière 20 prenant de préférence la forme d'un tube fluorescent, d'une longueur pouvant par exemple atteindre 1, m et disposant d'un diamètre compris de préférence entre 5 et 20 mm, par exemple 16 mm.

Pour assurer l'implantation de ce tube 20 dans l'espace inter-cloison 16, le module 14 comprend un corps support 28 présentant préférentiellement une section en forme de U, et de longueur légèrement supérieure à celle du tube 20 placé en son sein, comme cela est visible sur les figures 2 à 4.

Plus précisément, le corps support 28 présente une épaisseur sensiblement identique à l'espacement 10, c'est-à-dire que la hauteur des deux branches 30 du U 28 est sensiblement égale à ce même espacement 10 entre les deux cloisons 6 et 8. Par conséquent, en étant glissé entre ces deux cloisons 6 et 8, le corps support 28 peut voir les deux extrémités libres des branches 30 du U au contact de la cloison en polycarbonate 6, ce qui permet d'isoler entièrement la source de lumière 20 de la cloison de protection biologique 8. En d'autres termes, l'ouverture de diffusion de lumière 32 définie entre les deux branches 30 du corps 28 de préférence réalisé en aluminium et d'épaisseur comprise entre 2 et 4 mm, est obturée par la cloison en polycarbonate 6 sur laquelle la lumière émise par la source 20 ne se reflète quasiment pas. A ce titre, il est noté que la distance minimum 34 entre la source de lumière 20 et la cloison 6 est fixée de manière à être préférentiellement inférieure à 10 mm, voire inférieure à 5 mm.

D'autre part, il est précisé que si le corps support 28 du module 14 est destiné à être introduit de façon glissée entre les.deux cloisons 6, 8 en prévoyant uniquement un jeu de montage entre ces éléments, des moyens additionnels peuvent néanmoins être prévus pour assurer la fixation rigide de ce corps 28 sur ces mêmes cloisons 6, 8. De préférence, des pattes de fixation empêchent tout mouvement du système d'éclairage en cas d'ouverture de la protection biologique, par exemple pour la vérification de non-présence de contamination.

Comme cela est le mieux visible sur la figure 2, les extrémités du corps de support 28 en forme de U sont obturées par des embouts 36, impliquant que la seule ouverture à travers laquelle la lumière peut être émise est l'ouverture 32 mentionnée ci-dessus, s'étendant sensiblement sur toute la longueur de ce corps 28.

En outre, la figure 4 montre que la source de lumière 20 est montée sur le corps 28 par des organes support 38 (un seul étant visible) dont une extrémité permet le clipsage du tube fluorescent 20, et dont l'autre extrémité est rapportée fixement sur la base du U, par exemple par vissage. Naturellement, les organes support 38 sont espacés les uns des autres dans la direction du tube 20 qu'ils supportent.

Enfin, il est précisé que pour diriger la lumière émise par la source 20 en direction de l'ouverture de diffusion 32, et donc vers la cloison 6, des moyens déflecteurs 40 sont également rapportés fixement sur la base du U 28, ces moyens déflecteurs 40 également situés dans l'espace défini entre les deux branches 30 du U 28 prenant de préférence la forme d'une tôle en acier à polissage du type miroir, repliée de façon à présenter une ouverture (non référencée) orientée vers l'ouverture de diffusion 32, et donc vers la cloison en polycarbonate 6.

Bien entendu, diverses modifications peuvent être apportées par l'homme du métier à l'invention qui vient d'être décrite, uniquement à titre d'exemples non limitatifs.

## Revendications

1. Boîte à gant (1) à enceinte étanche (2) délimitée au moins partiellement par une paroi (4) disposant d'une cloison en polycarbonate (6) et d'une cloison de protection biologique (8) espacée de ladite cloison en polycarbonate (6) et agencée extérieurement par rapport à celle-ci, ladite boîte à gant comprenant en outre des moyens d'éclairage (12) de ladite enceinte, ces moyens d'éclairage comportant une source de lumière (20),
**caractérisée en ce que** ladite source de lumière (20) est logée entre ladite cloison en polycarbonate (6) et ladite cloison de protection biologique (8).

2. Boîte à gant (1) selon la revendication 1, **caractérisée en ce que** ladite source de lumière (20) est un tube fluorescent.

3. Boîte à gant (1) selon la revendication 1 ou la revendication 2, **caractérisée en ce que** lesdits moyens d'éclairage (12) comprennent un ballast électronique (18) pour l'alimentation de ladite source de lumière .(20).

4. Boîte à gant (1) selon l'une quelconque des revendications précédentes, **caractérisée en ce que** ladite cloison de protection biologique (8) est une cloison permettant d'atténuer les rayonnements gamma et/ou neutrons.

5. Boîte à gant (1) selon la revendication 4, **caractérisée en ce que** ladite cloison de protection biologique (8) est une cloison en verre dopé avec un absorbant neutrophage et/ou un absorbant dense.

6. Boîte à gant (1) selon la revendication 5, **caractérisée en ce que** ladite cloison de protection biologique (8) est une cloison en verre au plomb.

7. Boîte à gant (1) selon la revendication 4, **caractérisée en ce que** ladite cloison de protection biologique (8) est une cloison en résine méthacrylique.

8. Boîte à gant (1) selon l'une quelconque des revendications précédentes, **caractérisée en ce que** lesdits moyens d'éclairage (12) comprennent un corps support (28) portant fixement ladite source de lumière (20) et présentant une ouverture de diffusion de lumière (32) obturée par ladite cloison en polycarbonate (6).

9. Boîte à gant (1) selon la revendication 8, **caractérisée en ce que** lesdits moyens d'éclairage (12) comprennent en outre des moyens déflecteurs de lumière (40) solidaires du corps support (28) et situés à l'intérieur de celui-ci, lesdits moyens déflecteurs (40) orientant ladite lumière émise par ladite source de lumière (20) vers ladite cloison en polycarbonate (6).

10. Boîte à gant (1) selon la revendication 8 ou la revendication 9, **caractérisée en ce que** ledit corps support (28) est un élément métallique de section en forme de U.

11. Boîte à gant (1) selon la revendication 10, **caractérisée en ce que** les deux extrémités libres (30) du U sont au contact de ladite cloison en polycarbonate (6).

12. Boîte à gant (1) selon l'une quelconque des revendications 8 à 11, **caractérisée en ce que** ledit corps support (28) est en aluminium.

## Claims

1. Glove box (1) with a sealed containment (2) delimited at least partially by a wall (4) having a polycarbonate partition (6) and a biological protection partition (8) spaced from the polycarbonate partition (6) and arranged externally with respect to same, said glove box also comprising lighting means (12) of said containment, said lighting means comprising a light source (20),
**characterised in that** said light source (20) is housed between said polycarbonate partition (6) and said biological protection partition (8).

2. Glove box (1) according to claim 1,
**characterised in that** said light source (20) is a fluorescent tube.

3. Glove box (1) according to claim 1 or claim 2, **characterised in that** said lighting means (12) comprise an electronic ballast (18) to supply said light source (20).

4. Glove box (1) according to any of the above claims, **characterised in that** said biological protection partition (8) is a partition making it possible to reduce gamma radiations and/or neutrons.

5. Glove box (1) according to claim 4,
**characterised in that** said biological protection partition (8) is a glass partition doped with a neutron-absorbing material and/or a dense absorbing material.

6. Glove box (1) according to claim 5,
**characterised in that** said biological protection partition (8) is a lead glass partition.

7. Glove box (1) according to claim 4,
**characterised in that** said biological protection partition (8) is a methacrylic resin partition.

8. Glove box (1) according to any of the above claims, **characterised in that** said lighting means (12) comprise a support body (28) bearing in a fixed manner said light source (20) and having a light diffusion opening (32) sealed by said polycarbonate partition (6).

9. Glove box (1) according to claim 8,
**characterised in that** said lighting means (12) also comprise light deflecting means (40) integral to the support body (28) and located therein, said deflecting means (40) orienting said light emitted by the light source (20) towards said polycarbonate partition (6).

10. Glove box (1) according to claim. 8 or claim 9, **characterised in that** said support body (28) is a metallic element having a U-shaped cross-section.

11. Glove box (1) according to claim 10,
**characterised in that** the both free ends (30) of the U are in contact with said polycarbonate partition (6).

12. Glove box (1) according to any of claims 8 to 11, **characterised in that** said support body (28) is made of aluminium.

## Patentansprüche

1. Handschuhfach (1) mit dichter Einfassung (2), mindestens teilweise durch eine Wand (4) abgegrenzt, die über eine Trennwand aus Polycarbonat (6) und eine biologische Schutztrennwand (8) verfügt, die von der Trennwand aus Polycarbonat (6) beabstandet und im Verhältnis zu dieser außen angeordnet ist, wobei das Handschuhfach ferner Mittel (12) zur Beleuchtung der Einfassung umfasst, wobei diese Beleuchtungsmittel eine Lichtquelle (20) umfassen,
**dadurch gekennzeichnet, dass** die Lichtquelle (20) zwischen der Trennwand aus Polycarbonat (6) und der biologischen Schutztrennwand (8) untergebracht ist.

2. Handschuhfach (1) nach Anspruch 1, **dadurch gekennzeichnet, dass** die Lichtquelle (20) eine Leuchtstoffröhre ist.

3. Handschuhfach (1) nach Anspruch 1 oder Anspruch 2, **dadurch gekennzeichnet, dass** die Beleuchtungsmittel (12) ein elektronisches Vorschaltgerät (18) für die Versorgung der Lichtquelle (20) umfassen.

4. Handschuhfach (1) nach einem der vorhergehenden Ansprüche, **dadurch gekennzeichnet, dass** die biologische Schutztrennwand (8) eine Trennwand ist, die es ermöglicht, Gamma- und/oder Neutronenstrahlungen abzuschwächen.

5. Handschuhfach (1) nach Anspruch 4, **dadurch gekennzeichnet, dass** die biologische Schutztrennwand (8) eine Trennwand aus Glas ist, das mit einem neutrophagen und/oder absorbierenden Absorptionsmittel dotiert ist.

6. Handschuhfach (1) nach Anspruch 5, **dadurch gekennzeichnet, dass** die biologische Schutztrehnvuand (8) eine Trennwand aus Bleiglas ist.

7. Handschuhfach (1) nach Anspruch 4, **dadurch gekennzeichnet, dass** die biologische Schutztrennwand (8) eine Trennwand aus Methacrylharz ist.

8. Handschuhfach (1) nach einem der vorhergehenden Ansprüche, **dadurch gekennzeichnet, dass** die Befeuchtungsmittel (12) einen Haltekörper (28) umfassen, der die Lichtquelle (20) ortsfest trägt und eine Lichtstreuungsöffnung (32) aufweist, die von der Polycarbonat-Trennwand (6) verschlossen wird.

9. Handschuhfach (1) nach Anspruch 8, **dadurch gekennzeichnet, dass** die Beleuchtungsmittel (12) ferner Lichtablenkmittel (40) umfassen, die mit dem Haltekörper (28) fest verbunden sind und sich in seinem Innern befinden, wobei die Ablenkmittel (40) das von der Lichtquelle (20) emittierte Leicht auf die Trennwand aus Polycarbonat (6) ausrichten.

10. Handschuhfach (1) nach Anspruch 8 oder Anspruch 9, **dadurch** gekenntzeichnet, dass der Haltekörper (28) ein Metallelement mit U-förmigem Querschnitt ist.

11. Handschuhfach (1) nach Anspruch 10, **dadurch gekennzeichnet, dass** die beiden freien Enden (30) des U die Trennwand aus Polycarbonat (6) berühren.

12. Handschuhfach (1) nach einem der Ansprüche 8 bis 11, **dadurch** gekenntzeichnet, dass der Haltekörper (28) aus Aluminium besteht.
